(19) **Europäisches Patentamt / European Patent Office / Office européen des brevets**

(11) **EP 3 894 488 B1**

(12) **FASCICULE DE BREVET EUROPEEN**

(45) Date de publication et mention de la délivrance du brevet:
**18.02.2026 Bulletin 2026/08**

(21) Numéro de dépôt: **19816746.2**

(22) Date de dépôt: **12.12.2019**

(51) Classification Internationale des Brevets (IPC):
**C09D 7/61** *(2018.01)* **C09D 133/06** *(2006.01)*

(52) Classification Coopérative des Brevets (CPC): (C-Sets disponibles)
**C09D 133/066;** C08K 2003/0812; C09D 7/65
(Cont.)

(86) Numéro de dépôt international:
**PCT/EP2019/084810**

(87) Numéro de publication internationale:
**WO 2020/120653 (18.06.2020 Gazette 2020/25)**

(54) **PEINTURES METALLIQUES A HAUT POUVOIR MASQUANT ET RESINE DE LIANT ORGANIQUE POUR CES PEINTURES**

METALLIC-LACKE MIT HOHEM DECKVERMÖGEN UND ORGANISCHES BINDEMITTEL FÜR DIESE LACKE

METALLIC PAINTS WITH HIGH HIDING POWER AND ORGANIC BINDER RESIN FOR THESE PAINTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2018 FR 1872859**

(43) Date de publication de la demande:
**20.10.2021 Bulletin 2021/42**

(73) Titulaire: **ARKEMA FRANCE**
**92800 Puteaux (FR)**

(72) Inventeurs:
• DELMAS, Grégory
  **60550 VERNEUIL EN HALATTE (FR)**
• LASSALLE, Justine
  **60550 VERNEUIL EN HALATTE (FR)**
• EVRARD, Didier
  **60550 VERNEUIL EN HALATTE (FR)**

(74) Mandataire: **Arkema Patent**
**Arkema France**
**DRD-DPI**
**51, Esplanade du Général de Gaulle**
**CS 10478**
**92907 Paris La Défense Cedex (FR)**

(56) Documents cités:
**EP-A1- 0 960 917 EP-A1- 1 384 758**
**EP-B1- 0 960 917**

(52) Classification Coopérative des Brevets (CPC):
(Cont.)

C-Sets
**C09D 133/066, C08L 33/066;**
**C09D 133/066, C08L 33/066, C08K 3/08**

**EP 3 894 488 B1**

**Description**

La présente invention, telle que définie dans les revendications, concerne d'abord une résine liant organique à base d'ur mélange de deux polymères ayant respectivement des fonctionnalités et masses moléculaires spécifiques, un procédé de préparation de ladite résine et son utilisation dans des compositions de revêtements métalliques, en particulier peintures métalliques en milieu aqueux et les compositions de revêtements métalliques comprenant ladite résine et présentant un haut pouvoir masquant par une bonne orientation des pigments métalliques.

Afin d'obtenir un aspect métallique, certains substrats sont revêtus d'une peinture contenant des pigments/-paillettes métalliques type aluminium, cuivre, etc. Ces revêtements peuvent être en phase solvant ou en phase aqueuse. Cependant, afin de réduire l'impact sur l'environnement et de réduire les émissions de composés organiques volatiles (COV), les nouvelles peintures sont principalement développées en milieu aqueux. La problématique de ce type de peintures métallisées est le placement des paillettes métalliques dans le film de peinture afin d'obtenir l'aspect esthétique souhaité avec en même temps un haut pouvoir masquant et un brillant élevé. En effet, pour une concentration de paillette donnée, la peinture doit masquer et recouvrir complètement le substrat. Ainsi, on définit le pouvoir masquant d'une peinture par la différence de couleur de cette dernière appliquée sur un fond blanc et noir. Une mesure optique réalisée par un colorimètre nous permet de caractériser ce pouvoir masquant (norme ISO 6504). Le terme « haut pouvoir masquant » selon l'invention signifie en particulier une valeur de pouvoir masquant selon méthode (norme) ISO 6504 supérieure à 98%. Le terme « brillant élevé » selon l'invention signifie en particulier une valeur de brillant en unités de brillance (ub) selon méthode (norme) ISO 2813 supérieure à 65 pour un angle de mesure de 60°.

Dans les peintures métalliques en milieu aqueux, il y a besoin des résines liants organiques dispersibles dans l'eau formant une dispersion stable et ayant une affinité spécifique par rapport aux pigments métalliques, en particulier par rapport à des pigments métalliques sous forme de paillettes, comme les pigments d'aluminium ou de cuivre. Le pouvoir masquant de la peinture est donc lié à l'aptitude de la résine liant organique à filmifier en un film homogène tout en permettant une dispersion fine des particules (paillettes) pigments métalliques et leur orientation dans le film homogène obtenu avec un pouvoir masquant de la peinture élevé et en même temps un brillant élevé.

EP0960917A1 divulgue des compositions pour revêtement aqueux sur base de pigments métalliques qui contiennent des polymères acryliques comprenant des fonctions acide et hydroxyle, EP1384758A1 divulgue des compositions aqueuses comprenant une résine obtenue par polymérisation de monomères acides et hydroxylés dans la première étape et des monomères acides, hydroxylés et comprenant une fonction diacétone dans la seconde étape et explique que ces résines sont utilisées dans des compositions de peinture métallique.

La présente invention concerne d'abord une résine liant organique qui est un mélange de deux résines polymères :

- P1 qui est une résine polymère acrylique fonctionnalisée -OH et -$CO_2$H de masse moléculaire moyenne en nombre Mn, mesurée par GPC dans le THF avec calibration polystyrène Mn < 25000, de préférence de 2000 à 15000 et dispersible dans l'eau sans aucun agent tensioactif ou dispersant et
- P2 qui est une résine polymère acrylique fonctionnalisée acétoxy et/ou diacétone

en plus des groupements OH et -$CO_2$H et a une Mn > 500000, les polymères P1 et P2 étant sous la forme de particules distinctes, avec le mélange P1 + P2 présentant un effet de synergie en performances applicatives et en particulier par rapport au pouvoir masquant du revêtement métallique, par rapport aux effets de chacune des deux résines prises séparément.

Concernant le pouvoir masquant de la composition finale de ce revêtement, pour une épaisseur sèche de 10 à 25 $\mu$m, on obtient une augmentation d'au moins 2% (visible à l'œil) et de préférence de 2 à 15% du pouvoir masquant (selon norme ISO 6504) obtenue avec une composition de revêtement comprenant ladite résine de l'invention avec P1 + P2 par rapport à une résine sans P2 (résine sans P2 prise comme référence de comparaison). En même temps, le brillant sous l'angle de 60° dudit revêtement se trouve également significativement amélioré d'au moins 15%, de préférence d'au moins 20%.

Un autre objet de l'invention concerne un procédé de préparation de ladite résine liant organique selon l'invention comprenant la préparation en étapes séparées de respectivement chacun desdits polymères P1 et P2 sous forme de dispersion aqueuse et pour finir le mélange de deux dispersions aqueuses correspondantes.

Un autre objet de l'invention concerne une composition de revêtement qui comprend au moins une résine liant organique selon l'invention, plus particulièrement cette composition étant une composition de revêtement métallique comprenant en plus un pigment métallique.

L'invention couvre également l'utilisation de ladite résine liant organique dans les compositions de revêtements métalliques ayant un comportement de réticulation de type monocomposant ou de type bicomposant et ayant une dispersion plus homogène des pigments métalliques et un pouvoir masquant mesuré selon la méthode ISO 6504 plus élevé par rapport à la composition ne comprenant pas la résine polymère P2.

3

Finalement, l'invention couvre le produit fini qui est un revêtement métallique qui résulte de ladite résine liant organique ou de ladite composition de revêtement comme définie ci-haut selon l'invention.

Le premier objet de l'invention concerne donc une résine liant organique pour revêtements aqueux, laquelle comprend :

a) un polymère P1, porteur de groupements réactifs X1 : hydroxyle et Y1 : carboxy avec respectivement un indice OH exprimé en % poids OH allant de 2 à 5%, de préférence de 2 à 4% et un indice acide IA exprimé en mg KOH/g d'au moins 10, de préférence allant de 10 à 50, plus préférentiellement de 10 à 40 et ledit polymère P1 ayant une masse moléculaire moyenne en nombre Mn1 (par GPC dans THF avec calibration polystyrène) inférieure à 25000, de préférence allant de 2000 à 15000 et de préférence allant de 2000 à 10000 et plus préférentiellement de 3000 à 8000

b) un polymère P2 porteur de groupements réactifs X2 : hydroxyles avec un indice OH exprimé en % poids OH allant de 0,5 à 2,5%, de préférence de 0,5 à 2%, des groupements Y2 : carboxy correspondant à un indice d'acide IA exprimé en mg KOH/g < 25, de préférence inférieur à 20 et de groupements Z2 choisis parmi acétoxy et/ou diacétone et ledit polymère P2 ayant une masse moléculaire moyenne en nombre Mn2 supérieure à 500000, les polymères P1 et P2 étant sous la forme de particules distinctes.

Les masses moléculaires Mn1 pour P1 sont déterminées par GPC dans le THF avec une calibration d'étalons polystyrène. Pour Mn2, elle peut être mesurée également par GPC avec étalons polystyrène mais on considère que cette masse moléculaire Mn2 > 500000 est atteinte implicitement lors d'une polymérisation radicalaire en émulsion sans aucun agent de transfert ajouté.

Selon une option particulière de ladite résine, le rapport en poids entre le polymère P1 et le polymère P2, P1/P2 varie de 50/50 à 95/5, de préférence de 70/30 à 90/10 et plus préférentiellement de 75/25 à 90/10.

Selon une option plus particulière et préférée, ladite résine est en dispersion dans l'eau avec un taux de solides P1 + P2 allant de 30 à 60% et de préférence de 35 à 55%.

Selon une autre option, ledit polymère P2 comprend un agent réticulant porteur d'au moins deux groupements hydrazides, en particulier quand ledit polymère P2 est sous forme d'une dispersion aqueuse de polymère et plus particulièrement une émulsion dudit polymère. Dans ce cas, ledit polymère P2 et en particulier ladite dispersion et plus particulièrement ladite émulsion est autoréticulable par réaction desdites fonctions hydrazides avec lesdits groupements Z2 tels que définis ci-haut, après élimination de l'eau par séchage.

Les polymères P1 et P2 sont sous la forme de particules distinctes. Ainsi, le polymère P1 n'est pas copolymérisé avec le polymère P2. Plus particulièrement et de manière préférée, ladite résine est sous forme d'un mélange de dispersions aqueuses respectives des polymères P1 et P2.

Selon une option particulière de la résine de l'invention, ledit polymère P1 est sous forme de dispersion aqueuse sans aucun tensioactif ou dispersant, de préférence ayant une taille moyenne de particules allant de 50 à 250 nm, de préférence de 50 à 200 nm selon la méthode ISO 13320.

Selon une option particulière, ledit polymère P2 est sous forme de dispersion aqueuse comprenant au moins un tensioactif, de préférence sélectionné parmi les tensioactifs comprenant à la fois une structure non ionique, en particulier parmi résidus d'alcools gras alcoxylés, de préférence éthoxylés et un groupement anionique, de préférence parmi phosphates, phosphinate, sulfonate et sulfate.

Selon une autre option particulière de ladite résine selon l'invention, ledit polymère P1 et ledit polymère P2 ont des températures de transition vitreuse respectives Tg1 et Tg2, mesurées par DSC (10°C/min 2 passages) comme suit :

- Tg1 inférieure ou égale à 30°C, de préférence de 0°C à 30°C, encore plus préférentiellement de 10 à 30°C

- Tg2 supérieure à 30°C et de préférence supérieure à 30°C et allant jusqu'à 65°C.

Selon une option particulière de la résine selon l'invention, ledit polymère P1 et/ou ledit polymère P2 sont des mélanges binaires respectifs de deux copolymères dont un est plus hydrophile (ou moins hydrophobe). Encore plus particulièrement, les particules de deux polymères P1 et/ou P2 en dispersion aqueuse sont composées de deux polymères dont l'un est significativement plus hydrophile que l'autre, de sorte que le moins hydrophile ou le plus hydrophobe se place au cœur de la particule et le plus hydrophile autour du polymère moins hydrophile. Dans ce cas, il y a formation d'une particule structurée de polymère P1 et/ou de polymère P2 en cœur/écorce. Le polymère hydrophile (ou moins hydrophobe) se distingue du polymère hydrophobe (ou moins hydrophile) par son taux en monomère acide carboxylique significativement supérieur dans le monomère hydrophile avec dans le polymère hydrophobe un taux en monomère acide carboxylique nul ou au moins plusieurs fois inférieur.

D'une manière générale, un monomère « hydrophobe » est un monomère ayant peu d'affinité avec l'eau ou qui est peu soluble dans l'eau, l'inverse étant valable pour un monomère hydrophile. Le même principe s'applique aux polymères. Une méthode d'estimation de cette hydrophobie est celle de mesure du coefficient de partage de la substance à évaluer, entre l'octanol et l'eau, avec l'hydrophobie exprimée en logarithme de ce coefficient de partage. La valeur d'hydrophobie logKow pour un monomère est une estimation calculée du logarithme du coefficient de partage (log P) entre l'octanol et l'eau, par la méthode de contribution des atomes et des fragments structuraux de la molécule, en utilisant pour cette estimation le logiciel (programme d'estimation) EPI (Estimation Program Interface) Suite® appelé KowWin de SRC (Syracure Research Corporation). La méthode et programme epi V4.11 utilisé pour ce calcul (estimation) de logKow pour les monomères, sont disponibles à l'adresse « https://www.epa.gov/tsca-screening-tools/download-epi-suitetm-estimation-program-interface-v411 ». Cette méthodologie est décrite par W. M. Meylan et P.H. Howard en 1995 dans « Atom/fragment contribution method for estimating octanol-water partition coefficients » dans Pharm. Sci. 84:83-92. Le coefficient de partage P correspond au rapport de la concentration chimique dans la phase octanol par rapport à la concentration chimique dans la phase aqueuse dans un système avec deux phases en équilibre. Concernant un copolymère, en particulier tel que P1 et P2 de la résine définie selon l'invention, la valeur globale d'hydrophobie selon l'invention, basée sur le logarithme du coefficient de partage octanol/eau, est définie comme étant la valeur moyenne en poids sur l'ensemble des monomères composants de la résine et elle est en particulier estimée par la moyenne en poids sur l'ensemble de monomères composants, des valeurs logKow individuelles calculées par la méthode KowWin, comme décrite ci-haut et correspond donc, selon cette définition à :

$$\text{valeur globale d'hydrophobie :} \Sigma i\, [x_i{}^{*}(logKow)_i]$$

avec,

$\Sigma i$ : sommation sur i monomères composants
$x_i$ : fraction en poids du monomère i dans ledit copolymère,
$(logKow)_i$: valeur d'hydrophobie calculée par la méthode KowWin pour ledit monomère i, avec Kow correspondant au coefficient calculé de partage octanol/eau et logKow étant le logarithme de ce coefficient. Ces définitions permettent ainsi de classer les polymères P1 et P2 suivant leur caractère hydrophobe (selon valeurs logKow croissantes) : le polymère le plus hydrophile est celui ayant le caractère le moins hydrophobe (valeur de logKow la plus faible) et inversement (le plus hydrophobe ayant la valeur logKow la plus élevée).

Plus particulièrement, ledit polymère P1 est moins hydrophobe (ou plus hydrophile) que ledit polymère P2 avec une valeur logKow (P1) comme définie ci-avant plus faible que la valeur logKow (P2) correspondant au polymère P2. De préférence, la différence entre les deux valeurs logKoW est d'au moins 0,5 et plus particulièrement d'au moins 1 unité.

Selon une version particulière de la résine selon l'invention, ledit polymère P1 est sous forme d'une post-dispersion dudit polymère après sa préparation par polymérisation radicalaire en solution en milieu solvant organique, ledit polymère étant dispersible en post-dispersion aqueuse et ne comprenant aucun agent dispersant ou tensioactif. Encore plus particulièrement, ledit polymère P1 comprend un copolymère acrylique ou un polymère styrène-acrylique. Ainsi, le polymère P1 peut être préparé par polymérisation radicalaire en solution dans un solvant organique type alcoolique comme le butyl glycol, en utilisant un amorceur type peroxydique et/ou perester soluble dans ledit solvant et avec une addition des monomères en deux étapes : la première comprend l'addition de la composition de monomères correspondant au polymère hydrophobe (absence de monomère acide carboxylique) et la deuxième la composition de monomères conduisant au polymère hydrophile ou moins hydrophobe (présence significative de monomère acide carboxylique). Le taux de polymère obtenu en solution varie de 75 à 90% en poids (équivalent au taux de monomères au départ en solution). A la fin de la polymérisation, le polymère final en solution est neutralisé (concernant les fonctions acides) par une base, laquelle peut être une amine, en particulier une amine tertiaire soluble dans l'eau avec addition d'eau et dispersion dans l'eau par inversion de phase avec un taux final de solides ajusté dans une plage allant de 30 à 60% et de préférence de 35 à 55% en poids.

Le polymère P1) peut être en particulier un copolymère ayant comme unités monomères à partir d'un mélange de monomères global suivant :

a1) au moins un hydroxyalkyl $C_2$-$C_4$ (méth)acrylate

a2) au moins un alkyl $C_1$-$C_2$ méthacrylate (sans autre groupement fonctionnel que méthacrylate)

a3) au moins un alkyl $C_4$-$C_8$ acrylate (sans autre groupement fonctionnel qu'acrylate)

a4) au moins un monomère alkyl $C_{10}$-$C_{14}$ (méth)acrylate

a5) acide (méth)acrylique

a6) en option, au moins un monomère vinyl aromatique.

Concernant ledit polymère P2, il est en particulier un copolymère en dispersion aqueuse telle qu'obtenue par polymérisation en émulsion avec un taux de solides allant de 30 à 60% et de préférence de 35 à 55%.

Plus particulièrement, ledit polymère P2 peut être un copolymère ayant comme unités monomères à partir d'un mélange global de monomères suivant :

b1) au moins un hydroxyalkyl $C_2$-$C_4$ (méth)acrylate

b2) au moins un alkyl $C_1$-$C_2$ méthacrylate (sans autre groupement fonctionnel que méthacrylate)

b3) au moins un alkyl $C_4$-$C_8$ méthacrylate (sans autre groupement fonctionnel que méthacrylate)

b4) acide (méth)acrylique

b5) au moins un parmi les monomères suivants : diacétone acrylamide et/ou (méth)acrylate porteur d'au moins un groupement acétoacétate

b6) au moins un di(méth)acrylate d'un diol en $C_4$-$C_8$.

Ledit polymère P2 peut être obtenu par polymérisation en émulsion d'une composition de monomères correspondant aux unités monomériques et proportions dans ledit polymère P2. Les particules de polymères P2 peuvent être structurées en cœur écorce avec un polymère cœur significativement moins hydrophile ou plus hydrophobe (avec taux de monomère acide carboxylique nul) que le polymère d'écorce significativement plus hydrophile ou moins hydrophobe avec un taux significatif de monomère acide carboxylique. La différence d'hydrophilie est ajustée par le taux d'acide monomère et l'incompatibilité entre les deux polymères par deux températures de transition vitreuse distinctes d'au moins 30°C, de préférence d'au moins 40°C.

Un deuxième objet de l'invention concerne un procédé de préparation de la résine selon l'invention telle que définie ci-avant, lequel procédé comprend les étapes suivantes :

i) préparation d'un polymère P1 tel que défini ci-haut selon l'invention comprenant une polymérisation radicalaire en solution suivie d'une post-émulsification en milieu aqueux pour donner lieu à une dispersion aqueuse dudit polymère P1,

ii) préparation par polymérisation en émulsion d'une dispersion aqueuse de polymère P2, tel que défini ci-haut selon l'invention,

iii) mélange de ladite dispersion aqueuse dudit polymère P1 avec celle dudit polymère P2.

Un autre objet de l'invention concerne une composition de revêtement, laquelle comprend au moins une résine liant organique telle que définie ci-haut selon l'invention.

En particulier, ladite composition de revêtement est une composition de revêtement métallique et comprend en plus de ladite résine liant organique (P1 + P2), au moins un pigment métallique, de préférence avec un taux dudit pigment par rapport audit liant organique sec (solides), allant de 15 à 40% en poids, plus préférentiellement allant de 20 à 30% en poids. Plus particulièrement, ladite composition est une composition aqueuse de revêtement métallique avec un taux de solides P1 + P2 allant de 5 à 30%, de préférence de 7 à 15% par rapport au poids de ladite composition. De préférence, ledit pigment métallique est sélectionné parmi des pigments d'aluminium ou de cuivre sous forme de paillettes. Plus préférentiellement, ladite composition de revêtement est une composition de peinture métallique.

Selon une préférence plus particulière, ladite composition est une peinture métallique aqueuse avec comme pigment métallique un pigment d'aluminium.

Selon une option plus particulière, ladite composition de revêtement comprend en plus au moins un agent réticulant réactif avec les groupements hydroxy dudit polymère P1 et P2 et sélectionné parmi les mélamines, les polyisocyanates, en particulier polyisocyanates bloqués ou anhydrides carboxyliques, de préférence mélamines et polyisocyanates.

Concernant son comportement réactionnel, ladite composition de revêtement peut être une composition ayant un comportement de réaction d'une composition monocomposante (1k), avec dans ce cas l'agent réticulant étant une mélamine ou un polyisocyanate bloqué, la réaction ayant lieu uniquement après chauffage ou selon une deuxième possibilité, ladite composition de revêtement peut être une composition ayant un comportement de réaction d'une composition bicomposante (2k), avec dans ce cas l'agent réticulant étant un polyisocyanate non-bloqué ou un anhydride carboxylique, auquel cas la réaction a lieu après mélange avec ledit agent réticulant (c'est-à-dire tout de suite après ce mélange). A la place de la phrase « la composition a un comportement de réaction d'une composition monocomposante (1k) » peut également être utilisée avec la même signification la phrase « la composition est de comportement monocomposant (1k) » ou « la composition est de type monocomposant ». Par analogie, cette utilisation de phrases équivalentes est également valable pour la phrase concernant « la composition a un comportement de réaction d'une composition bicomposante (2k) ».

Ladite composition de revêtement selon l'invention peut comprendre en plus d'autres additifs tels que choisis parmi : agents de rhéologie, épaississants, agents de surface, colorant, catalyseur, agents biocides et antimousse, dispersants et agents coalescents.

Un autre objet de l'invention concerne l'utilisation de la résine comme définie ci-haut selon l'invention, dans des compositions de revêtements métalliques, à comportement monocomposant ou bicomposant et ayant (présentant) une dispersion significativement plus homogène des pigments métalliques et un pouvoir masquant (ISO 6504) plus élevé par rapport à la même composition avec une résine ne comprenant pas ledit polymère P2.

Plus particulièrement, ladite utilisation concerne des revêtements métalliques réticulés de protection pour substrats métalliques ou plastiques, dans l'industrie de la construction et de réparation en général et de préférence dans l'industrie de la construction et de réparation de véhicules de transport, de l'automobile, de l'électroménager et d'accessoires de véhicules de transport.

Finalement, l'invention couvre également un revêtement métallique qui est obtenu à partir de l'utilisation d'une résine telle que définie ci-haut ou d'une composition de revêtement telle que définie ci-avant selon l'invention. En particulier, ledit revêtement métallique est un revêtement de peinture métallique, avec comme pigment métallique un pigment d'aluminium. Encore plus particulièrement, ledit revêtement métallique est réticulé.

Les exemples suivants sont donnés pour illustrer l'invention et ses performances et ne limitent pas sa portée, laquelle est définie par les revendications.

PARTIE EXPERIMENTALE

1) Matières premières utilisées pour synthèse et formulations d'application Voir tableau 1 ci-dessous.

Matières premières utilisées

[Tableau 1]

| Réf commerciale | Nom chimique | Fournisseur | Fonction technique |
|---|---|---|---|
| SYNAQUA® E21011 | Dispersion de polymère acrylique hydroxylé et carboxylé | ARKEMA | Polymère P1 |
| ENCOR® 2171 | Emulsion acrylique hydroxylée auto réticulable | ARKEMA | Polymère P2 |
| CYMEL® 303 LF | Mélamine méthylée à bas taux de formol | ALLNEX | Agent réticulant |
| TOLONATE® D2 | Polyisocyanate aliphatique bloqué | VENCOREX | Agent réticulant |
| STAPA IL HYDROLAN® 8154 | Pâte pigmentaire aluminium (% poids Al : 60) | ECKART | Pigment aluminium |
| HYCRYL® 0210 | Epaississant associatif | ARKEMA | Epaississant |
| DISPERBYK® 190 | Dispersant polymère bloc | BYK | Dispersant mouillant |

Les caractéristiques des polymères P1 et P2 utilisés comme composants de la résine selon l'invention figurent au tableau 2 ci-dessous.

Récapitulatif des caractéristiques de P1 (SYNAQUA E21011), P2 (ENCOR 2171)

[Tableau 2]

| Réf | Mn | OH / résine (% poids) | Carboxy (mg KOH/g) | Acétoxy/ diacétone | Taux solides (%) | Tg (°C) |
|---|---|---|---|---|---|---|
| SYNAQUA® E21011 (P1) | > 2000 et < 10000 | 3 | 18 | non | 45 | 20 |
| ENCOR® 2171 (P2) | > 500000 | 1,3 | 12 | oui | 43 | 35 |

3) Préparation des formulations de peintures métalliques

Les caractéristiques globales des 4 formulations testées figurent au tableau 3 ci-dessous.

Caractéristiques globales

[Tableau 3]

| Caractéristique / Réf | 1 | 2 | 3 | 4 |
|---|---|---|---|---|
| Invention / comparatif | invention | comparatif | invention | comparatif |
| Rapport P1/P2 (en poids sec) | 80/20 | 100/0 | 80/20 | 100/0 |
| Agent réticulant | Mélamine (Cymel® 303 LF) | Mélamine (Cymel® 303 LF) | Polyisocyanate (Tolonate® D2) | Polyisocyanate (Tolonate® D2) |
| Rapport P1 + P2 / mélamine (en poids sec) | 80/20 | 80/20 | - | - |
| Rapport molaire NCO / OH | - | - | 1,32 | 1,32 |
| Rapport Pigment / Liant | 0,20 | 0,20 | 0,20 | 0,20 |
| Extrait sec calculé % | 20,6 | 20,6 | 20,6 | 20,6 |
| CPV calculée % | 15,6 | 15,6 | 15,6 | 15,6 |
| pH (ISO 976) | 7,8 | 7,7 | 7,6 | 7,7 |

Mode opératoire de préparation des formulations des peintures métalliques : dans l'ordre indiqué selon étapes A) à E) suivantes, ajouter les compositions 1 à 4 du tableau 4 ci-dessous :

A) Ajouter composition 1 et homogénéiser 30 min

B) Ajouter la composition 2 à la composition 1 et homogénéiser 15 min

C) Pré-mélanger la composition 3 et puis l'ajouter à 1 + 2 et homogénéiser 10 min

D) Pré-mélanger composition 4 et l'ajouter à 1 + 2 + 3, puis homogénéiser 10 min

E) Ajouter la composition 5 à 1 + 2 + 3 + 4 et agiter pendant 5 min

F) Ajouter en dispersant les composants 6, 7, 8 et 9 dans l'ordre indiqué

Formulations détaillées de peintures métalliques (% en poids)

[Tableau 4]

| Composition | Référence-> Composant | 1 | 2 | 3 | 4 |
|---|---|---|---|---|---|
| 1 | STAPA IL HYDROLAN® 8154 | 5,4 | 5,4 | 5,5 | 5,5 |
|  | DISPERBYK® 190 | 0,6 | 0,6 | 0,6 | 0,6 |
|  | BUTYL GLYCOL | 5,0 | 5,0 | 5,0 | 5,0 |
|  | DIMETHYL SULFOXYDE | 1,7 | 1,7 | 1,7 | 1,7 |
| 2 | DIMETHYL | 1,1 | 1,1 | 1,1 | 1,1 |
|  | ETHANOLAMINE/20% HYCRYL® 0210/10% | 4,4 | 4,4 | 4,4 | 4,4 |
|  | EAU DEMINERALISEE | 5,1 | 5,1 | 5,1 | 5,1 |
| 3 | ENCOR® 2171 | 5,3 |  | 4,7 |  |
|  | EAU DEMINERALISEE | 17,2 |  | 17,2 | 17,3 |
| 4 | SYNAQUA® E21011 | 23,7 | 28,3 | 18,0 | 21,5 |
|  | CYMEL® 303 LF | 3,3 | 3,3 |  |  |
|  | TOLONATE® D2 |  |  | 7,9 | 8,5 |
|  | EAU DEMINERALISEE |  | 17,2 |  |  |
| 5 | HYCRYL® 0210/10% | 5,0 | 5,0 | 5,0 | 5,0 |
| 6 | DIMETHYL ETHANOLAMINE/20% | 0,3 | 0,3 | 0,3 | 0,3 |
| 7 | EAU DEMINERALISEE | 8,0 | 8,1 | 8,1 | 8,1 |
| 8 | n-BUTANOL | 0,8 | 0,8 | 0,8 | 0,8 |
| 9 | EAU DEMINERALISEE | 13,1 | 13,3 | 14,5 | 15,2 |
|  | TOTAL | 100,0 | 100,0 | 100,0 | 100,0 |

4) Tests applicatifs et conditions

Description des tests et méthodes utilisées :

Conditions d'application de la formulation de peinture métallique

- Bar coater 100 μm

- Epaisseur film humide 100 μm

- Type d'éprouvettes plaques fer blanc 250*125*0,3 mm (L*l*épaisseur), type TC100 (Espan Color)

Séchage

- 10 min flash à température ambiante (23°C+/- 2°C, HR 50 +/- 5%)

- Etuvage 20 min à 140°C

Mesures

- Pouvoir masquant suivant norme ISO 6504 (appareillage spectrophotomètre CM2600D Minolta)

- Brillant sous les angles de 20°, 60° et 85° (appareillage brillancemètre Micro tri gloss - Byk/Gardner) en unités de brillance (ub) suivant la norme ISO 2813.

5) Résultats applicatifs

Résultats présentés au tableau 5 ci-dessous concernant le pouvoir masquant de la peinture.

Résultats de mesure du pouvoir masquant (ISO 6504) sur formulations testées 1 à 4

[Tableau 5]

| Réf Formulation | 1 | 2 | 3 | 4 |
|---|---|---|---|---|
| Epaisseur sèche en $\mu$m (ISO 2808) | 17±2 | 17±2 | 18±2 | 15±2 |
| Pouvoir masquant (ISO 6504) | 99,7 | 95,9 | 99,6 | 95,4 |

Les résultats de brillant sont présentés au tableau 6 ci-dessous.

Résultats de brillant (ISO 2813)

[Tableau 6]

| Fond | Réf Formulation | 1 | 2 | 3 | 4 |
|---|---|---|---|---|---|
| | Angle | | | | |
| Blanc | 20° | 27 | 13 | 28 | 5 |
| | 60° | 77 | 50 | 78 | 18 |
| | 85° | 84 | 69 | 85 | 21 |
| Noir | 20° | 24 | 13 | 25 | 4 |
| | 60° | 74 | 49 | 75 | 17 |
| | 85° | 82 | 66 | 83 | 20 |

**Revendications**

1. Résine liant organique pour revêtements aqueux, **caractérisée en ce qu'**elle comprend :

   a) un polymère P1, porteur de groupements réactifs X1 : hydroxyle et Y1 : carboxy avec respectivement un indice OH exprimé en % poids OH allant de 2 à 5%, de préférence de 2 à 4% et un indice acide IA exprimé en mg KOH/g d'au moins 10, de préférence allant de 10 à 50, plus préférentiellement de 10 à 40 et ledit polymère P1 ayant une masse moléculaire moyenne en nombre Mn1 déterminée par GPC dans THF avec calibration polystyrène inférieure à 25000, de préférence allant de 2000 à 15000 et de préférence allant de 2000 à 10000 et plus préférentiellement de 3000 à 8000,
   b) un polymère P2 porteur de groupements réactifs X2 : hydroxyles avec un indice OH exprimé en % poids OH allant de 0,5 à 2,5% de préférence de 0,5 à 2%, des groupements Y2 : carboxy correspondant un indice d'acide IA exprimé en mg KOH/g < 25, de préférence inférieur à 20 et de groupements Z2 choisis parmi acétoxy et/ou diacétone et ledit polymère P2 ayant une masse moléculaire moyenne en nombre Mn2 supérieure à 500000

   les polymères P1 et P2 étant sous la forme de particules distinctes.

2. Résine selon la revendication 1, **caractérisée en ce que** le rapport en poids entre le polymère P1 et le polymère P2, P1/P2 varie de 50/50 à 95/5, de préférence de 70/30 à 90/10 et plus préférentiellement de 75/25 à 90/10.

3. Résine selon la revendication 1 ou 2, **caractérisée en ce que** ledit polymère P2 comprend un agent réticulant porteur d'au moins deux groupements hydrazides.

**4.** Résine selon l'une des revendications 1 à 3, **caractérisée en ce que** ladite résine est sous forme d'un mélange de dispersions aqueuses respectives des polymères P1 et P2.

**5.** Résine selon l'une des revendications 1 à 4, **caractérisée en ce que** ledit polymère P2 est sous forme de dispersion aqueuse comprenant un tensioactif, de préférence sélectionné parmi les tensioactifs comprenant à la fois une structure non ionique, en particulier parmi résidus d'alcools gras alcoxylés, de préférence éthoxylés et un groupement anionique, de préférence parmi phosphates, phosphinate, sulfonate et sulfate.

**6.** Résine selon l'une des revendications 1 à 5, **caractérisée en ce que** ledit polymère P1 et ledit polymère P2 ont des températures de transition vitreuse respectives Tg1 et Tg2, mesurées par DSC (10°C/min 2 passages) comme suit :

- Tg1 inférieure ou égale à 30°C, de préférence de 0°C à 30°C, encore plus préférentiellement de 10 à 30°C
- Tg2 supérieure à 30°C et de préférence supérieure à 30°C et allant jusqu'à 65°C.

**7.** Résine selon l'une des revendications 1 à 6, **caractérisée en ce que** ledit polymère P1 et/ou ledit polymère P2 sont des mélanges respectifs binaires de deux copolymères dont un est plus hydrophile.

**8.** Résine selon l'une des revendications 1 à 7, **caractérisée en ce que** ledit polymère P1 comprend un copolymère acrylique ou un polymère styrène-acrylique.

**9.** Résine selon l'une des revendications 1 à 8, **caractérisée en ce que** ledit polymère P1 est un copolymère ayant comme unités monomères à partir d'un mélange de monomères global suivant :

a1) au moins un hydroxyalkyl $C_2$-$C_4$ (méth)acrylate
a2) au moins un alkyl $C_1$-$C_2$ méthacrylate
a3) au moins un alkyl $C_4$-$C_8$ acrylate
a4) au moins un monomère alkyl $C_{10}$-$C_{14}$ (méth)acrylate
a5) acide (méth)acrylique
a6) en option, au moins un monomère vinyl aromatique.

**10.** Résine selon l'une des revendications 1 à 9, **caractérisée en ce que** ledit polymère P2 est un copolymère ayant comme unités monomères à partir d'un mélange de monomères suivant :

b1) au moins un hydroxyalkyl $C_2$-$C_4$ (méth)acrylate
b2) au moins un alkyl $C_1$-$C_2$ méthacrylate
b3) au moins un alkyl $C_4$-$C_8$ méthacrylate
b4) acide (méth)acrylique
b5) au moins un parmi les monomères suivants : diacétone acrylamide et/ou un parmi (méth)acrylate porteur d'au moins un groupement acétoacétate b6) au moins un di(méth)acrylate d'un diol en $C_4$-$C_8$.

**11.** Procédé de préparation d'une résine telle que définie selon l'une des revendications 1 à 10, **caractérisé en ce qu'**il comprend les étapes suivantes :

i) préparation d'un polymère P1 tel que défini selon l'une des revendications 1 à 10, comprenant une polymérisation radicalaire en solution suivie d'une post-émulsification en milieu aqueux pour donner lieu à une dispersion aqueuse dudit polymère P1
ii) préparation par polymérisation en émulsion d'une dispersion aqueuse de polymère P2, tel que défini selon l'une des revendications 1 à 10
iii) mélange de ladite dispersion aqueuse dudit polymère P1 avec celle dudit polymère P2.

**12.** Composition de revêtement, **caractérisée en ce qu'**elle comprend au moins une résine liant organique telle que définie selon l'une des revendications 1 à 10.

**13.** Composition de revêtement selon la revendication 12, **caractérisée en ce qu'**elle est une composition de revêtement métallique et qu'elle comprend en plus de ladite résine liant organique (P1 + P2), au moins un pigment métallique, de préférence avec un taux dudit pigment par rapport audit liant organique sec (solides) allant de 15 à 40% en poids, plus préférentiellement allant de 20 à 30% en poids.

14. Composition selon la revendication 12 ou 13, **caractérisée en ce qu'**elle comprend en plus au moins un agent réticulant réactif avec les groupements hydroxy dudit polymère P1 et P2 et sélectionné parmi les mélamines, les polyisocyanates, en particulier polyisocyanates bloqués ou anhydrides carboxyliques, de préférence mélamines et polyisocyanates.

15. Utilisation de la résine telle que définie selon l'une des revendications 1 à 10, dans des compositions de revêtements métalliques, à comportement monocomposant ou bicomposant et ayant une dispersion significativement plus homogène des pigments métalliques et un pouvoir masquant plus élevé par rapport à la même composition avec une résine ne comprenant pas ledit polymère P2.

16. Revêtement métallique, **caractérisé en ce qu'**il est obtenu à partir de l'utilisation d'une résine telle que définie selon l'une des revendications 1 à 10 ou d'une composition de revêtement telle que définie selon l'une des revendications 12 à 14.

**Patentansprüche**

1. Organisches Bindemittelharz für wässrige Beschichtungen, **dadurch gekennzeichnet, dass** es Folgendes umfasst:

   a) ein Polymer P1 mit reaktiven Gruppen X1: Hydroxyl und Y1: Carboxy mit einer in Gew.-% OH ausgedrückten OH-Zahl im Bereich von 2 bis 5 %, vorzugsweise von 2 bis 4 %, und einer in mg KOH/g ausgedrückten Säurezahl SZ von mindestens 10, vorzugsweise im Bereich von 10 bis 50, weiter bevorzugt von 10 bis 40, und wobei das Polymer P1 eine durch GPC in THF mit Polystyrol-Kalibrierung bestimmte zahlenmittlere Molmasse Mn1 von weniger als 25.000, vorzugsweise im Bereich von 2000 bis 15.000, vorzugsweise im Bereich von 2000 bis 10.000 und weiter bevorzugt von 3000 bis 8000 aufweist,
   b) ein Polymer P2 mit reaktiven Gruppen X2: Hydroxyl mit einer in Gew.-% OH ausgedrückten OH-Zahl im Bereich von 0,5 bis 2,5 %, vorzugsweise von 0,5 bis 2 %, Gruppen Y2: Carboxy entsprechend einer in mg KOH/g ausgedrückten Säurezahl SZ < 25, vorzugsweise weniger als 20, und Gruppen Z2, die aus Acetoxy- und/oder Diacetongruppen ausgewählt sind, und wobei das Polymer P2 eine zahlenmittlere Molmasse Mn2 von mehr als 500.000 aufweist,

   wobei die Polymere P1 und P2 in Form von getrennten Teilchen vorliegen.

2. Harz nach Anspruch 1, **dadurch gekennzeichnet, dass** das Gewichtsverhältnis zwischen dem Polymer P1 und dem Polymer P2, P1/P2, im Bereich von 50/50 bis 95/5, vorzugsweise von 70/30 bis 90/10 und weiter bevorzugt von 75/25 bis 90/10 liegt.

3. Harz nach Anspruch 1 oder 2, **dadurch gekennzeichnet, dass** das Polymer P2 ein Vernetzungsmittel mit mindestens zwei Hydrazidgruppen umfasst.

4. Harz nach einem der Ansprüche 1 bis 3, **dadurch gekennzeichnet, dass** das Harz in Form einer Mischung von jeweils wässrigen Dispersionen der Polymere P1 und P2 vorliegt.

5. Harz nach einem der Ansprüche 1 bis 4, **dadurch gekennzeichnet, dass** das Polymer P2 in Form einer wässrigen Dispersion vorliegt, die ein Tensid umfasst, das vorzugsweise aus Tensiden ausgewählt ist, die sowohl eine nichtionische Struktur, insbesondere aus alkoxylierten, vorzugsweise ethoxylierten, Fettalkoholen, als auch eine anionische Gruppe, vorzugsweise aus Phosphaten, Phosphinat, Sulfonat und Sulfat, umfassen.

6. Harz nach einem der Ansprüche 1 bis 5, **dadurch gekennzeichnet, dass** das Polymer P1 und das Polymer P2 jeweilige mittels DSC (10 °C/min, 2 Durchläufe) bestimmte Glasübergangstemperaturen Tg1 und Tg2 wie folgt aufweisen:

   - Tg1 kleiner oder gleich 30 °C, vorzugsweise von 0 °C bis 30 °C, noch weiter bevorzugt von 10 bis 30 °C,
   - Tg2 größer als 30 °C und vorzugsweise größer als 30 °C und im Bereich bis zu 65 °C.

7. Harz nach einem der Ansprüche 1 bis 6, **dadurch gekennzeichnet, dass** es sich bei dem Polymer P1 und/oder dem Polymer P2 um jeweilige binäre Mischungen von zwei Copolymeren, von denen eines hydrophiler ist, handelt.

8. Harz nach einem der Ansprüche 1 bis 7, **dadurch gekennzeichnet, dass** das Polymer P1 ein Acrylcopolymer oder ein Styrol-Acryl-Polymer umfasst.

9. Harz nach einem der Ansprüche 1 bis 8, **dadurch gekennzeichnet, dass** es sich bei dem Polymer P1 um ein Copolymer handelt, das als Monomereinheiten ausgehend von einer folgenden Gesamtmonomerenmischung aufweist:

    a1) mindestens ein Hydroxyalkyl-$C_2$-$C_4$-(meth)acrylat,
    a2) mindestens ein Alkyl-$C_1$-$C_2$-methacrylat,
    a3) mindestens ein Alkyl-$C_4$-$C_8$-acrylat,
    a4) mindestens ein Alkyl-$C_{10}$-$C_{14}$- (meth) acrylat-Monomer a5) (Meth)acrylsäure,
    a6) gegebenenfalls mindestens ein vinylaromatisches Monomer.

10. Harz nach einem der Ansprüche 1 bis 9, **dadurch gekennzeichnet, dass** es sich bei dem Polymer P2 um ein Copolymer handelt, das als Monomereinheiten ausgehend von einer folgenden Monomerenmischung aufweist:

    b1) mindestens ein Hydroxyalkyl-$C_2$-$C_4$-(meth)acrylat,
    b2) mindestens ein Alkyl-$C_1$-$C_2$-methacrylat,
    b3) mindestens ein Alkyl-$C_4$-$C_8$-methacrylat,
    b4) (Meth)acrylsäure,
    b5) mindestens eines der folgenden Monomere: Diacetonacrylamid und/oder ein (Meth)acrylat mit mindestens einer Acetoacetatgruppe,
    b6) mindestens ein Di(meth)acrylat eines $C_4$-$C_8$-Diols.

11. Verfahren zur Herstellung eines Harzes gemäß einem der Ansprüche 1 bis 10, **dadurch gekennzeichnet, dass** es die folgenden Schritte umfasst:

    i) Herstellen eines Polymers P1 gemäß einem der Ansprüche 1 bis 10, umfassend eine radikalische Lösungspolymerisation mit anschließender Nachemulgierung in wässrigem Medium zum Erhalt einer wässrigen Dispersion des Polymers P1,
    ii) Herstellen einer wässrigen Dispersion von Polymer P2 gemäß einem der Ansprüche 1 bis 10 durch Emulsionspolymerisation,
    iii) Mischen der wässrigen Dispersion des Polymers P1 mit der Dispersion des Polymers P2.

12. Beschichtungszusammensetzung, **dadurch gekennzeichnet, dass** sie mindestens ein organisches Bindemittelharz gemäß einem der Ansprüche 1 bis 10 umfasst.

13. Beschichtungszusammensetzung nach Anspruch 12, **dadurch gekennzeichnet, dass** es sich dabei um eine Metalleffektbeschichtungszusammensetzung handelt und dass sie zusätzlich zu dem organischen Bindemittelharz (P1 + P2) mindestens ein Metalleffektpigment umfasst, vorzugsweise mit einem Gehalt des Pigments, bezogen auf das trockene organische Bindemittel (Feststoffe) im Bereich von 15 bis 40 Gew.-%, weiter bevorzugt im Bereich von 20 bis 30 Gew.-%.

14. Zusammensetzung nach Anspruch 12 oder 13, **dadurch gekennzeichnet, dass** sie außerdem mindestens ein Vernetzungsmittel umfasst, das gegenüber den Hydroxygruppen des Polymers P1 und P2 reaktiv ist und aus Melaminen, Polyisocyanaten, insbesondere blockierten Polyisocyanaten, oder Carbonsäureanhydriden, vorzugsweise Melaminen und Polyisocyanaten, ausgewählt ist.

15. Verwendung des Harzes gemäß einem der Ansprüche 1 bis 10 in Metalleffektbeschichtungszusammensetzungen mit einkomponentigem oder zweikomponentigem Verhalten und mit einer erheblich homogeneren Dispersion der Metalleffektpigmente und einer höheren Deckkraft als die gleiche Zusammensetzung mit einem Harz ohne das Polymer P2.

16. Metalleffektbeschichtung, **dadurch gekennzeichnet, dass** sie durch die Verwendung eines Harzes gemäß einem der Ansprüche 1 bis 10 oder einer Beschichtungszusammensetzung gemäß einem der Ansprüche 12 bis 14 erhalten wird.

**Claims**

1.  Organic binder resin for aqueous coatings, **characterized in that** it comprises:

    a) a polymer P1, bearing reactive groups X1: hydroxyl and Y1: carboxyl with, respectively, an OH number expressed as weight percentage of OH ranging from 2% to 5%, preferably from 2% to 4%, and an acid number IA expressed in mg KOH/g of at least 10, preferably ranging from 10 to 50, more preferentially from 10 to 40, and said polymer P1 having a number-average molecular mass Mn1 determined by GPC in THF with polystyrene calibration of less than 25 000, preferably ranging from 2000 to 15 000, preferably ranging from 2000 to 10 000 and more preferentially from 3000 to 8000,
    b) a polymer P2 bearing reactive groups X2: hydroxyl with an OH number expressed as weight percentage of OH ranging from 0.5% to 2.5%, preferably from 0.5% to 2%, groups Y2: carboxyl corresponding to an acid number IA expressed in mg KOH/g < 25, preferably less than 20, and groups Z2 chosen from acetoxy and/or diacetone and said polymer P2 having a number-average molecular mass Mn2 of greater than 500 000,

    the polymers P1 and P2 being in the form of different particles.

2.  Resin according to Claim 1, **characterized in that** the weight ratio between the polymer P1 and the polymer P2, P1/P2, ranges from 50/50 to 95/5, preferably from 70/30 to 90/10 and more preferentially from 75/25 to 90/10.

3.  Resin according to Claim 1 or 2, **characterized in that** said polymer P2 comprises a crosslinking agent bearing at least two hydrazide groups.

4.  Resin according to one of Claims 1 to 3, **characterized in that** said resin is in the form of a mixture of respective aqueous dispersions of the polymers P1 and P2.

5.  Resin according to one of Claims 1 to 4, **characterized in that** said polymer P2 is in the form of an aqueous dispersion comprising a surfactant, preferably selected from surfactants simultaneously comprising a nonionic structure, in particular from alkoxylated, preferably ethoxylated, fatty alcohol residues and an anionic group, preferably from phosphates, phosphinate, sulfonate and sulfate.

6.  Resin according to one of Claims 1 to 5, **characterized in that** said polymer P1 and said polymer P2 have respective glass transition temperatures Tg1 and Tg2, measured by DSC (10°C/min, two passes), as follows:

    - Tg1 less than or equal to 30°C, preferably from 0°C to 30°C, even more preferentially from 10 to 30°C
    - Tg2 greater than 30°C, preferably greater than 30°C and ranging up to 65°C.

7.  Resin according to one of Claims 1 to 6, **characterized in that** said polymer P1 and/or said polymer P2 are respective binary mixtures of two copolymers, one of which is more hydrophilic.

8.  Resin according to one of Claims 1 to 7, **characterized in that** said polymer P1 comprises an acrylic copolymer or a styrene-acrylic polymer.

9.  Resin according to one of Claims 1 to 8, **characterized in that** said polymer P1 is a copolymer containing, as monomer units starting with a following overall monomer mixture:

    a1) at least one $C_2$-$C_4$ hydroxyalkyl (meth)acrylate
    a2) at least one $C_1$-$C_2$ alkyl methacrylate
    a3) at least one $C_4$-$C_8$ alkyl acrylate
    a4) at least one $C_{10}$-$C_{14}$ alkyl (meth)acrylate monomer
    a5) (meth)acrylic acid
    a6) optionally, at least one vinylaromatic monomer.

10. Resin according to one of Claims 1 to 9, **characterized in that** said polymer P2 is a copolymer containing, as monomer units starting with a following monomer mixture:

    b1) at least one $C_2$-$C_4$ hydroxyalkyl (meth)acrylate
    b2) at least one $C_1$-$C_2$ alkyl methacrylate

b3) at least one $C_4$-$C_8$ alkyl methacrylate
b4) (meth)acrylic acid
b5) at least one from among the following monomers: diacetone acrylamide and/or one from among (meth)acrylate bearing at least one acetoacetate group
b6) at least one di(meth)acrylate of a $C_4$-$C_8$ diol.

11. Process for preparing a resin as defined in one of Claims 1 to 10, **characterized in that** it comprises the following steps:

i) preparation of a polymer P1 as defined in one of Claims 1 to 10, comprising a solution radical polymerization followed by post-emulsification in aqueous medium to give rise to an aqueous dispersion of said polymer P1
ii) preparation by emulsion polymerization of an aqueous dispersion of polymer P2, as defined in one of Claims 1 to 10
iii) mixing of said aqueous dispersion of said polymer P1 with that of said polymer P2.

12. Coating composition, **characterized in that** it comprises at least one organic binder resin as defined in one of Claims 1 to 10.

13. Coating composition according to Claim 12, **characterized in that** it is a metallic coating composition and comprises, in addition to said organic binder resin (P1 + P2), at least one metallic pigment, preferably with a content of said pigment relative to said dry organic binder (solids) ranging from 15% to 40% by weight, more preferentially ranging from 20% to 30% by weight.

14. Composition according to Claim 12 or 13, **characterized in that** it also comprises at least one crosslinking agent that is reactive with the hydroxyl groups of said polymer P1 and P2 and selected from melamines, polyisocyanates, in particular blocked polyisocyanates or carboxylic anhydrides, preferably melamines and polyisocyanates.

15. Use of the resin as defined in one of Claims 1 to 10, in metallic coating compositions with one-component or two-component behaviour and having a significantly more homogeneous dispersion of the metallic pigments and a higher masking power than those of the same composition with a resin not comprising said polymer P2.

16. Metallic coating, **characterized in that** it is obtained from the use of a resin as defined in one of Claims 1 to 10, or of a coating composition as defined in one of Claims 12 to 14.

## RÉFÉRENCES CITÉES DANS LA DESCRIPTION

**Documents brevets cités dans la description**

- EP 0960917 A1
- EP 1384758 A1